(19) Europäisches Patentamt
European Patent Office
Office européen des brevets

(11) Veröffentlichungsnummer: **0 021 079**
**A1**

# (12) EUROPÄISCHE PATENTANMELDUNG

(21) Anmeldenummer: **80102946.3**

(22) Anmeldetag: **27.05.80**

(51) Int. Cl.³: **C 07 C 93/04**, C 07 C 93/08, C 08 G 18/18

(30) Priorität: **06.06.79 DE 2922967**

(43) Veröffentlichungstag der Anmeldung: **07.01.81 Patentblatt 81/1**

(84) Benannte Vertragsstaaten: **BE CH DE FR GB IT LI NL**

(71) Anmelder: **BAYER AG, Zentralbereich Patente, Marken und Lizenzen, D-5090 Leverkusen 1, Bayerwerk (DE)**

(72) Erfinder: **Meyborg, Holger, Dr., Bergstrasse 92, D-5068 Odenthal (DE)**
Erfinder: **Illger, Hans-Walter, Dr., Im Tentefeld 27, D-5064 Rösrath (DE)**
Erfinder: **König, Klaus, Dr., Heymannstrasse 50, D-5090 Leverkusen (DE)**
Erfinder: **Seifert, Peter, Dr., August Kirspelstrasse 161, D-5060 Bergisch Gladbach (DE)**
Erfinder: **Rabe, Hans-Jürgen, Dr., Am Domblick 20, D-5090 Leverkusen 31 (DE)**

## (54) Tert. Aminogruppen aufweisende Orthocarbonsäureester, ihre Herstellung und Verwendung als Katalysatoren.

(57) Orthocarbonsäureester der allgemeinen Formel

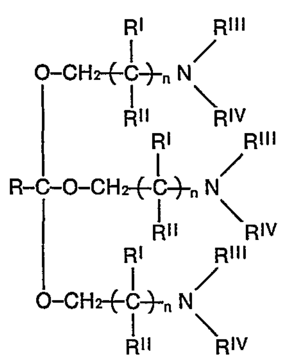

in der

| | |
|---|---|
| R | H, $C_1$-$C_{19}$-Alkyl, Aryl, vorzugsweise H, Methyl oder Phenyl, |
| $R^I$, $R^{II}$ | H, $C_1$-$C_4$-Alkyl, vorzugsweise H und/oder Methyl, Ethyl, |
| $R^{III}$, $R^{IV}$ | $C_1$-$C_6$-Alkyl, zusammen mit N fünf- oder sechsgliedriger Heterocyclus, vorzugsweise Methyl, Ethyl, |
| n | eine ganze Zahl von 1—5, bedeuten. |

EP 0 021 079 A1

0021079

BAYER AKTIENGESELLSCHAFT
Zentralbereich
Patente, Marken und Lizenzen

5090 Leverkusen, Bayerwerk
GM-by

Tert. Aminogruppen aufweisende Orthocarbonsäureester, ihre Herstellung und Verwendung als Katalysatoren

Die vorliegende Erfindung betrifft neue, tert. Aminogruppen aufweisende Orthocarbonsäureester, die vorteilhaft als Katalysatoren bei der Herstellung von Polyurethanen, vorzugsweise für die Herstellung von Polyurethan-Schaumstoffen mit verbesserten mechanischen Eigenschaften, geeignet sind.

Es ist bekannt, Urethangruppen enthaltende Schaumstoffe herzustellen, indem man aktive Wasserstoffatome aufweisende Verbindungen mit Polyisocyanaten in Gegenwart von Wasser, Aktivatoren, Stabilisatoren und gegebenenfalls Emulgatoren zur Reaktion bringt. Als Aktivatoren finden dabei vielfach tert. Amine Verwendung.

Technisch werden zur Beschleunigung der Treibreaktion oft Bis-(dialkylaminoalkyl)-ether verwendet, wie sie in der US-Patentschrift 3 330 782, der DE-AS 1 030 558 und der DE-OS 1 804 361 beschrieben werden. Maßgeblich für die katalytische Wirkung dieser Verbindungen ist offensichtlich die Kombination aus Ether-Sauerstoffatom und tertiärem Stickstoffatom, welche in ß- oder γ-Stellung zueinander stehen.

Überraschenderweise wurde nun gefunden, daß tert. Aminogruppen aufweisende Orthocarbonsäureester der allgemeinen Formel (I) mit Vorteil als Aktivatoren bei der Herstellung von Polyurethanen geeignet sind. Dabei ist besonders hervorzuheben, daß die neuen Verbindungen im Gegensatz zu bekannten Orthocarbonsäureestern wenig oder gar nicht wasserempfindlich ist.

Gegenstand der Erfindung sind Verbindungen der allgemeinen Formel (I)

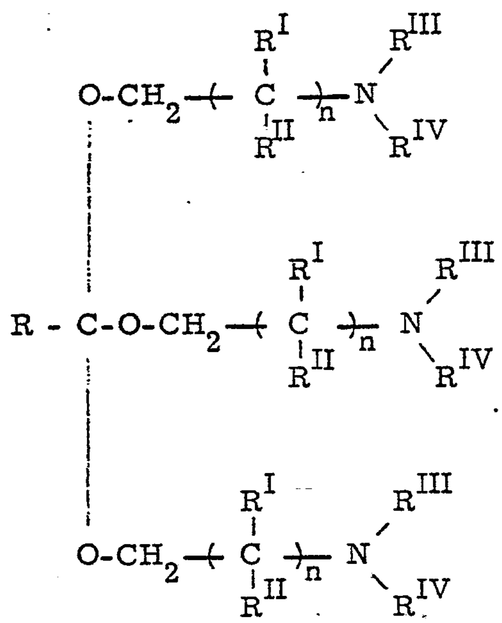

(I)

in der

R H, $C_1$-$C_{19}$-Alkyl, (gegebenenfalls substituiertes) Aryl, vorzugsweise H, Methyl oder Phenyl,

$R^I$, $R^{II}$ H, $C_1$-$C_4$-Alkyl, vorzugsweise H und/oder Methyl, Ethyl

$R^{III}$, $R^{IV}$ $C_1$-$C_6$-Alkyl, zusammen mit N fünf- oder sechsgliedriger Heterocyclus, vorzugsweise Methyl, Ethyl

n eine ganze Zahl von 1 - 5

bedeuten.

Diese Verbindungen der allgemeinen Formel (I) lassen sich z.B. nach an sich bekannten Methoden der Umesterung von Orthocarbonsäuretrialkylestern mit N,N-disubstituierten Aminoalkoholen der allgemeinen Formel

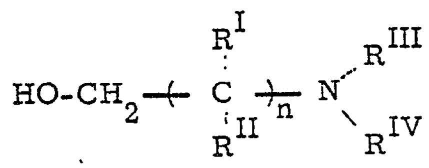

in der

$R^I$, $R^{II}$, $R^{III}$, $R^{IV}$ und n die bereits genannte Bedeutung haben,

in Gegenwart katalytischer Mengen an Säure herstellen.

Methoden zur Herstellung von Orthocarbonsäureestern durch Alkoholyse werden z.B. im Houben_Weyl, Band VI/3 auf Seite 299-313 beschrieben.

Die vorliegende Erfindung betrifft somit auch ein Verfahren zur Herstellung von Orthocarbonsäureestern der allgemeinen Formel (I), indem man Orthocarbonsäureester der allgemeinen Formel



BAD ORIGINAL

$$R\text{-}C(COR^{VI})_3$$

in der

R die bereits genannte Bedeutung hat und

$R^{VI}$ $C_1$-$C_6$ Alkyl ist,

mit N,N-disubstituierten Aminoalkoholen der allgemeinen Formel

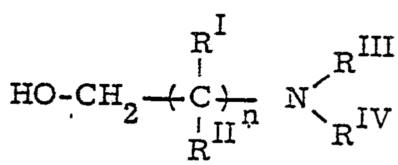

in der

$R^{I}$, $R^{II}$, $R^{III}$, $R^{IV}$ und n die bereits genannte Bedeutung haben,

in Gegenwart einer Säure bei einer Temperatur, die oberhalb des Siedepunktes der Alkoholkomponente des eingesetzten Orthocarbonsäureesters bei Normaldruck oder im Vakuum liegt, umestert.

Es ist erfindungsgemäß vorteilhaft, daß die Umsetzung zwischen dem eingesetzten Orthocarbonsäureester und dem Aminoalkohol mindestens im Molverhältnis 1:3 erfolgt, ferner daß als Säure eine Lewissäure, insbesondere wasserfreies Zink- oder Zinn (II)-chlorid, eingesetzt wird, vorzugsweise maximal 10 Gew.-% Lewissäure, bezogen

auf den eingesetzten Orthocarbonsäureester und daß der während der Umsetzung gebildete Alkohol kontinuierlich abdestilliert wird.

Bevorzugt ist der eingesetzte Orthocarbonsäureester Orthoameisensäuretrimethylester und/oder Orthoameisensäuretriethylester oder Orthoessigsäuretrimethylester und/oder Orthoessigsäuretriethylester und der Aminoalkohol N,N-Dimethylaminoethanol.

Die vorliegende Erfindung betrifft darüber hinaus auch ein Verfahren zur Herstellung von gegebenenfalls zellförmigen Polyurethanen durch Umsetzung von

a) Polyisocyanaten mit

b) höhermolekularen Verbindungen mit mindestens zwei gegenüber Isocyanaten reaktionsfähigen Wasserstoffatomen sowie gegebenenfalls

c) Kettenverlängerungsmitteln in Gegenwart von

d) tertiären Aminen als Katalysatoren, gegebenenfalls unter Mitverwendung von

e) Treibmitteln, Stabilisatoren und weiteren an sich bekannten Zusatzstoffen,

das dadurch gekennzeichnet ist, daß als Komponente d)

Verbindungen der allgemeinen Formel (I) eingesetzt werden, bevorzugt Orthoameisensäure-tris-(2-dimethylaminoethyl)-ester.

Für die Umesterung geeignete Aminoalkohole sind z.B. 4-Dimethylaminobutanol-1,3-Dimethylaminopropanol-1,3-Diethylaminopropanol-1, 2-Diethylaminoethanol-1 und insbesondere 2-Dimethylaminoethanol.

Für die Umesterung geeignete Orthocarbonsäureester als Ausgangskomponente zur Herstellung der neuen Verbindungen (I) sind z.B. Orthoameisensäuretrimethylester, Orthoessigsäuretrimethyl- oder -triethylester, Ortho-propionsäuretrimethylester, Orthophenylessigsäuretrimethylester, Orthocyclopentancarbonsäuretrimethylester, Orthocyclohexancarbonsäuretrimethylester, Ortho-stearinsäure-triethylester, Orthoölsäuretrimethylester und insbesondere der Orthoameisensäuretriethylester.

Die erfindungsgemäßen, tert. Aminogruppen aufweisenden Orthocarbonsäureester sind auch auf anderen Wegen präparativ zugänglich, z.B. durch Alkoholyse von Orthoameisensäuretriethylester mit ß-Chlorethanol und nachfolgende Umsetzung des Tris-(ß-Chlorethyl)-orthoformiats mit wäßriger Dimethylamin-Lösung, oder durch Umsetzung von Benzotrichlorid mit dem Natriumalkoholat des Dimethylaminoethanols, die direkt zum entsprechenden Orthobenzoesäureester führt. Bevorzugt ist aber die erstgenannte Herstellungsmethode.

Die erfindungsgemäßen Verbindungen sind im Vergleich zu bekannten Aminkatalysatoren wie dem Bis-(dimethylaminoethyl)-ether oder dem Diazabicyclooctan technisch leicht zugänglich. Die mit ihrer Hilfe hergestellten Polyurethan-Schaumstoffe weisen einen verbesserten Druckverformungsrest auf und besitzen damit verbesserte Dauergebrauchseigenschaften.

Die erfindungsgemäßen Verbindungen werden als Katalysatoren in der Regel in Mengen von 0,01 - 5 Gew.-% vorzugsweise 0,1 - 1 Gew.-%, bezogen auf das Reaktionsgemisch aus Polyisocyanaten, reaktiven Verbindungen sowie gegebenenfalls Treibmitteln und/oder weiteren Zusatzstoffen, eingesetzt.

Beispiele für die erfindungsgemäßen Verbindungen sind Tris-(dimethylaminoethyl)-orthoformiat, Tris-(dimethylaminoethyl)-orthoacetat, Tris-(dimethylaminoethyl)-orthopropionat, Tris-(dimethylaminoethyl)-orthobenzoat, Tris-(diethylaminoethyl)-orthobenzoat, Tris-(dimethylaminopropyl)-orthoformiat, Tris-(diemethylaminopropyl)-orthoacetat, Tris-(diethylaminoethyl)-orthoformiat, Tris-(diethylaminoethyl)-orthoacetat. Bevorzugt sind das Tris-(dimethylaminoethyl)-orthoformiat und das Tris-(dimethylaminoethyl)-orthoacetat. Weitere Beispiele für erfindungsgemäße Verbindungen sind:

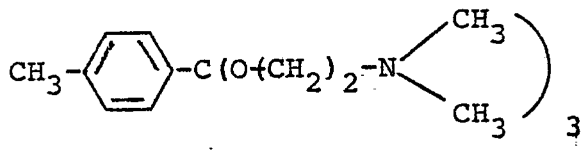

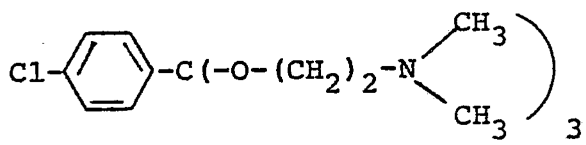

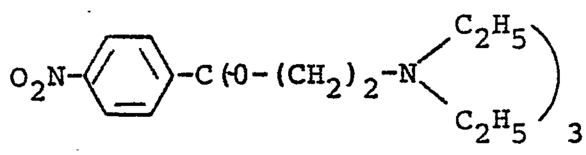

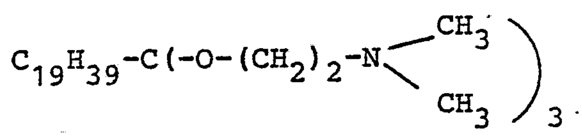

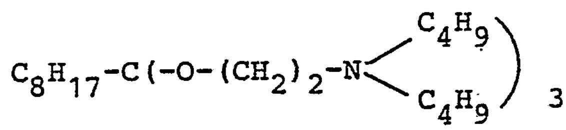

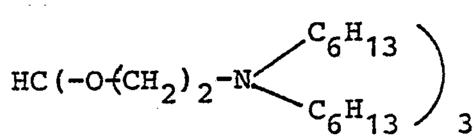

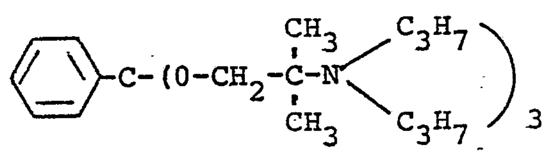

Für die Herstellung von gegebenenfalls zellförmigen Polyurethanen werden erfindungsgemäß eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\ (NCO)_n$$

in der
$n$ = 2-4, vorzugsweise 2,
und
Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8 - 13 C-Atomen,
bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat,Naphthylen-1,5-diisocyanat.

Ferner kommen beispielsweise erfindungsgemäß in Frage: Triphenylmethan-4,4',4"-triisocyanat, Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und

1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400 - 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 400 bis 10 000, vorzugsweise 1000 bis 6000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bisglykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol,Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid , gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

c) Unter den Polythioäthern seien insbesondere die Kondensationsprodukte von Thiodiglykol mit sich selbst und/oder mit anderen Glykolen, Dicarbonsäuren,

Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

h) Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen,

in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 - 10 000 , z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:
Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon,

Äthanolamin, Diäthanolamin, N-Methyldiätanolamin, Triäthanolamin und 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthra-

zene (DE-Offenlegungsschrift 2 638 731 ) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, ß-Methyladipinsäure, Sebazinsäure, Hydracrylsäure und Terephthalsäure; Semicarbazido-alkylen-hydrazide wie z.B. ß-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. ß-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfcnat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

4. Als weitere erfindungsgemäß geeignete niedermolekulare Polyole vom Molekulargewicht bis 400 Esterdiole der allgemeinen Formeln

$HO-(CH_2)_x-CO-O-(CH_2)_y-OH$ und

$HO-(CH_2)_x-O-CO-R-CO-O-(CH_2)_x-OH$

in denen

R einen Alkylenrest mit 1-10, vorzugsweise 2-6, C-Atomen bzw. einen Cycloalkylen- oder Arylenrest mit 6-10 C-Atomen

x = 2 - 6 und

y = 3 - 5

bedeuten,

z.B. δ-Hydroxybutyl-ε-hydroxy-capronsäureester, ω-Hydroxyhexyl-γ-hydroxybuttersäureester, Adipinsäure-bis-(ß-hydroxyäthyl)ester und Terephthalsäure-bis(ß-hydroxyäthyl)ester;

Diolurethane der allgemeinen Formel

$HO-(CH_2)_x-O-CO-NH-R'-NH-CO-O-(CH_2)_x-OH$

in der

R' einen Alkylenrest mit 2 - 15, vorzugsweise 2 - 6, C-Atomen oder einen Cycloalkylen- oder Arylenrest mit 6 - 15 C-Atomen und

x eine Zahl zwischen 2 und 6

darstellen,

z.B. 1,6-Hexamethylen-bis-(ß-hydroxyäthylurethan) oder 4,4'-Diphenylmethan-bis-(δ-hydroxybutylurethan);

sowie Diolharnstoffe der allgemeinen Formel

$$HO-(CH_2)_x-\underset{\displaystyle R'''}{N}-CO-NH-R''-NH-CO-\underset{\displaystyle R'''}{N}-(CH_2)_x-OH$$

in der

R" einen Alkylenrest mit 2- 15, vorzugsweise 2 - 9, C-Atomen oder einen Cycloalkylen- oder Arylenrest mit 6 - 15 C-Atomen,

R'" Wasserstoff oder eine Methylgruppe und

x die Zahlen 2 oder 3

bedeuten,

z.B. 4,4'-Diphenylmethan-bis-(ß-hydroxyäthylharnstoff) oder die Verbindung

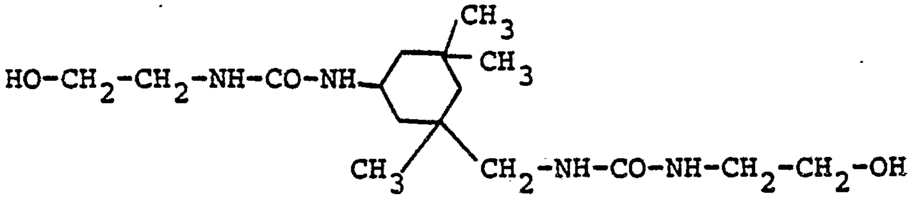

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butandiol-1,4 bzw. dessen Alkoxylierungsprodukte.

5. Gegebenenfalls als Hilfs- und Zusatzmittel:

a) Wasser und/oder leicht flüchtige anorganische oder organische Substanzen als Treibmittel. Als organische Treibmittel kommen z.B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther,als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Zusätzlich Katalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diaza-

bicyclo-(2,2,2)-octan, N-Methyl-N'-dimethylaminoäthyl-piperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzyl-amin, Bis-(N,N-diäthylaminoäthyl)-adipat, N,N,N',N'-Tetramethyl-1,3-butandiamin, N,N-Dimethyl-ß-phenyl-äthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B.

Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre

Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen,

als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten zusätzlichen Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von gegebenenfalls zusätzlich zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Diese Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat,

Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag,

München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die folgenden Beispiele erläutern das erfindungsgemäße Verfahren.

Beispiel 1

74 g (0,5 Mol) Orthoameisensäuretriethylester werden mit 470 g (5,3 Mol) N-Dimethylethanolamin in Gegenwart von 5 g $ZnCl_2$ umgesetzt. Die Badtemperatur beträgt 175°C. Das entstehende Ethanol wird über eine 1 Meter-Füllkörperkolonne abdestilliert. Nachdem über 90 % der berechneten Menge an Ethanol aufgefangen ist, wird der Reaktionsansatz aufdestilliert. Die Ausbeute an Orthoameisensäuretris-(2-dimethylaminoethyl)-ester beträgt 110 g (0,4 Mol) bzw. 80 %. Der Reinheitsgrad liegt laut gaschromatographischer Analyse bei 96 %.
$Kp_{0,1}$ = 100-105°C

Beispiel 2

| | | | | |
|---|---|---|---|---|
| Ansatz: | 62,16 kg | Orthoameisensäuretriethylester | 420 | Mol |
| | 117,48 kg | 2-Dimethylaminoethanol | 1320 | Mol |
| | 300 g | $SnCl_2$ wasserfrei als Katalysator | | |

In einem 250-l-V4A-Kessel mit Dampfbeheizung bis 30 bar, Rührer, Füllkörperkolonne (Höhe: 2,2 m, Durchmesser 20 cm), Rücklaufteiler und Wechselvorlage wurden die Komponenten zunächst 2 Std. unter vollständigem Rücklauf erhitzt, wobei sich eine Sumpftemperatur von 117°C einstellte. Danach wurde im Rücklaufverhältnis von 2:1 Ethanol abgenommen. Im Verlauf von 20 Stunden wurde die Sumpftemperatur auf 155°C nach und nach gesteigert. Dabei destillierten 52,7 kg (91 % der Theorie) Ethanol über.

In weiteren 2 Stunden bei 155-165°C wurden weitere 3,8 kg eines Gemisches abdestilliert, das zu 75 % aus Ethanol bestand (zusammen 55,07 kg, 95 % der Theorie). Nun wurde der Kesselinhalt auf 50°C abgekühlt und bei 6 mm zwischen 50 und 100°C ein Vorlauf von 18 kg abdestilliert, der im wesentlichen aus Dimethylethanolamin bestand. Danach wurde bei einem Druck von 1-2 mm aufdestilliert. Nach einer Vorfraktion bis Kp 124°C (Menge 4,1 kg) wurden 99 kg Hauptfraktion erhalten. Im Kessel verblieben 2,3 kg Sumpf. Die Hauptfraktion bestand zu 92 % aus dem Tris-(-dimethylaminoethyl)-ester und zu 8 % aus dem Bis-(dimethylaminoethyl)-monoethylester.

In einem weiteren Ansatz wurden die Vorläufe des ersten Ansatzes mit eingesetzt:

| | | |
|---|---|---|
| 55,o kg | Orthoameisensäuretriethylester | 372 Mol |
| 92,4 kg | Dimethylethanolamin | 1038 Mol |
| 18,0 kg | Dimethylethanolamin -Vorlauf- | ∿ 202 Mol |
| 4,1 kg | Vorfraktion | |
| 300 g | konz. $H_2SO_4$ als Katalysator | |

Nach beendeter Umesterung unter den gleichen Bedingungen wurde mit 500 g wasserfreier Soda neutralisiert. Nach Aufdestillieren wurden erhalten:

| | |
|---|---|
| 21,3 kg | Dimethylethanolamin-Vorlauf |
| 4,8 kg | Vorfraktion |
| 92,0 kg | Hauptfraktion |
| 2,o kg | Rückstand |

Die Hauptfraktion bestand zu 95 % aus dem Tris-(-dimethylaminoethyl-)-ester.

Gesamtausbeute über beide Ansätze: ~ 90 % der Theorie.

Beispiel 3

74 g (o,5 Mol) Orthoameisensäuretriethylester werden mit 581 g (5 Mol) N-Diethylaminoethanol in Gegenwart von 2 g $ZnCl_2$ umgesetzt. Die Badtemperatur beträgt 175°C. Das entstehende Ethanol wird über eine 1 mtr. Füllkörperkolonne abdestilliert. Nachdem über 90 % der berechneten Ethanolmenge aufgefangen ist, wird der Reaktionsansatz aufdestilliert. Die Ausbeute an Orthoameisensäuretris-(diethylaminoethyl)-ester beträgt 133 g (0,37 Mol) bzw. 74 %. Der Reinheitsgrad liegt laut gaschromatographischer Analyse bei 98,4 %. $Kp_{0,07}$= 130-130°C.

Beispiel 4

60 g (0,5 Mol) Orthoessigsäuretrimethylester werden mit 470 g (5,3 Mol) N-Dimethylaminoethanol in Gegenwart von 5 g $ZnCl_2$ umgesetzt. Das entstehende Methanol wird bei einer Badtemperatur von 150-175°C über eine 1-mtr.-Füllkörperkolonne abdestilliert. Nachdem über 90 % der berechneten Menge an Methanol aufgefangen ist, wird der Reaktionsansatz aufdestilliert. Die Ausbeute an Orthoessigsäuretris-(dimethylaminoethyl)-ester

beträgt 100 g (0,35 Mol) bzw. 70 %. Der Reinheitsgrad liegt laut gaschromatographischer Analyse bei 92,8 %. $Kp_{0,08}$= 98-103°C.

Beispiel 5

148 g (1 Mol) Orthoameisensäuretriethylester werden mit 241,5 g (3 Mol) ß-Chlorethanol umgeestert. Die Ausbeute an Orthoameisensäuretris-(ß-chlorethyl)-ester ($Kp_{0,04}$= 100-105°C) beträgt 200 g (0,8 Mol). 60 g (0,24 Mol) Orthoameisensäuretris-(ß-chlorethyl)-ester werden mit 250 g einer 50 %igen wäßrigen Dimethylaminlösung bei 50°C umgesetzt. Nach ca. 6h werden überschüssiges Amin und Wasser abdestilliert und der Rückstand mit 39 g KOH versetzt. Der Reaktionsansatz wird aufdestilliert. Es werden 33 g eines laut gaschromatographischer Analyse mit dem unter 1) hergestellten Produkt identischen Produkts vom Siedepunkt $Kp_{0,1}$= 110-150°C erhalten.

Beispiel 6

Weichschaumblöcke wurden auf einer kontinuierlich arbeitenden Hochdruckmaschine (Fa. Hennecke, Birlinghoven, Siegkreis, Bundesrepublik Deutschland) nach folgender Rezeptur hergestellt:

100 Gew.-Teile eines trifunktionellen Polyetherpolyols der OH-Zahl 45

65,2 Gew.-Teile TDI (Toluylendiisocyanat) (Gemisch aus 2,4- und 2,6-Diisocyanatotoluol im Verhältnis 80:20)

5,5 Gew.-Teile eines handelsüblichen Weichschaumstabilisators (Polysiloxan-Polyalkylenglykol-Blockcopolymeres)

NCO-Index 105

Als Aminaktivator wurden 0,15 Gew.-Teile des im Beispiel 1 hergestellten Orthoesters eingesetzt. Als Vergleich wurde der obige Ansatz mit 0,15 Gew.-Teilen eines bekannten Aminaktivators verschäumt (einer Mischung aus 5 Gew.-Teilen Silamorpholin und 95 Gew.-Teilen eines handelsüblichen tert. Amins). Beide Schaumstoffe waren offenzellig und störungsfrei. Steig- und Abbindezeiten und die physikalischen Eigenschaften der erhaltenen Schaumstoffe sind in folgender Tabelle zusammengefaßt.

| | Orthoester Beispiel 1 | handelsüblicher Aktivator |
|---|---|---|
| Steigzeit | 61 sek. | 60 sek. |
| Abbindezeit | 19 sek. | 17 sek. |
| Rohdichte (kg/$m^3$) | 19 | 19 |
| Zugfestigkeit (KPa) | 111 | 112 |
| Bruchdehnung (%) | 194 | 210 |
| Stauchhärte (40%) (KPe) | 3,3 | 3,5 |
| Stauchhärte nach Fordtest (KPe) | 2,7 | 2,8 |
| Druckverformungsrest (90%) (%) | 6,8 | 7,5 |
| Druckverformungsrest nach Fordtest (90%) (%) | 6,8 | 7,9 |

Beispiel 7

100 Gew.-Teile eines Polyetherpolyols mit der OH-Zahl 35 und dem mittleren Molekulargewicht von 4800

26,8 Gew.-Teile TDI (Isomerengemisch im Verhältnis 65:35)

2 Gew.-Teile Wasser

0,6 Gew.-Teile eines handelsüblichen Weichschaumstabilisators

0,2 Gew.-Teile Zinn(II)-octoat

NCO-Index 105

Als Aminaktivator wurden 0,22 Gew.-Teile des im Beispiel 1 hergestellten Orthoesters eingesetzt. Als Vergleich wurde der obige Ansatz mit 0,22 Gew.-Teilen des im Beispiel 6 bereits verwendeten bekannten Aminaktivators verschäumt.

| | Orthoester | handelsübl. Amin |
|---|---|---|
| Steigzeit | 112 sek. | 113 sek. |
| Abbindezeit | 51 sek. | 48 sek. |
| Rohdichte | 49 | 50 |
| Zugfestigkeit | 111 | 118 |
| Bruchdehnung | 160 | 190 |
| Stauchhärte | 6,2 | 6,3 |
| Stauchhärte nach Fordtest | 4,5 | 4,5 |
| Druckverformungsrest | 2,7 | 3,7 |
| Druckverformungsrest nach Fordtest | 3,2 | 4,8 |

Beispiel 8

100 Gew.-Teile eines trifunktionellen, hochaktiven Polyetherpolyols mit einer OH-Zahl von 28, modifiziert mit 20 Gew.-% eines hochmolekularen, festen Umsetzungsproduktes aus Toluylendiisocyanat und Hydrazin.

16,5 Gew.-Teile TDI (Isomerengemisch im Verhältnis 80:20)
16,5 Gew.-Teile TDI (Isomerengemisch im Verhältnis 65:35)
2,7 Gew.-Teile Wasser
0,8 Gew.-Teile eines handelsüblichen Weichschaumstabilisators
0,2 Gew.-Teile Dimethylaminoethanol
NCO-Index 105

Als weiterer Aktivator wurden 0,45 Gew.-Teile des in Beispiel 1 hergestellten Orthoesters eingesetzt. Als Vergleich wurde der obige Ansatz mit 0,45 Gew.-Teilen Diazabicyclooctan (33 %ig in Dipropylenglykol) verschäumt. Beise Schaumstoffe waren offenzellig und störungsfrei.

Reaktions- und Abbindezeiten und die physikalischen Eigenschaften der erhaltenen Schaumstoffe sind in folgender Tabelle zusammengefaßt:

| | Orthoester | Dabco 33 LV |
|---|---|---|
| Reaktionszeit | 76 sek. | 77 sek. |
| Abbindezeit | 70 sek. | 68 sek. |
| Rohdichte | 42 | 43 |
| Zugfestigkeit | 154 | 152 |
| Bruchdehnung | 130 | 110 |
| Stauchhärte | 9,1 | 9,0 |
| Stauchhärte nach Fordtest | 5,8 | 6,3 |
| Druckverformungsrest | 7,2 | 7,5 |
| Druckverformungsrest nach Fordtest | 10,7 | 12,4 |

Beispiel 9

50 Gew.-Teile des in Beispiel 7 verwendeten Polyethers
50 Gew.-Teile des in Beispiel 8 verwendeten Polyethers
34,5 Gew.-Teile TDI (Isomerengemisch im Verhältnis 80:20)
2,5 Gew.-Teile Wasser
0,5 Gew.-Teile eines handelsüblichen Weichschaumstabilisators
2 Gew.-Teile Tris-(ß-chlorethyl)-phosphat
1 Gew.-Teil Diethanolamin
0,05 Gew.-Teile eines bekannten Katalysatorgemisches, bestehend aus
70 % Bis-dimethylaminoethylether
30 % Dipropylenglykol
0,15 Gew.-Teile Zinn(II)-octoat

Als weiterer Aminaktivator wurden 0,1 Gew.-Teile des im Beispiel 1 hergestellten Orthoesters eingesetzt. Als Vergleich wurde der obige Ansatz mit 0,1 Gew.-Teilen Diazabicyclooctan (33 %ig in Dipropylenglykol) verschäumt.

Beide Schaumstoffe waren offenzellig und störungsfrei. Reaktions- und Abbindezeiten und die physikalischen Eigenschaften der erhaltenen Schaumstoffe sind in folgender Tabelle zusammengefaßt:

| | Orthoester | Dabco 33 LV |
|---|---|---|
| Reaktionszeit | 125 sek. | 128 sek. |
| Abbindezeit | 7 sek. | 7 sek. |
| Rohdichte | 38 | 39 |
| Zugfestigkeit | 131 | 132 |
| Druckdehnung | 184 | 186 |
| Stauchhärte | 3,3 | 3,3 |
| Stauchhärte nach Fordtest | 3,0 | 3,3 |
| Druckverformungsrest | 6,6 | 7,3 |
| Druckverformungsrest nach Fordtest | 8,5 | 7,5 |

Zusammenfassend läßt sich für die Beispiele 6-9 feststellen, daß die Verwendung des Orthoesters aus Beispiel 1 im Vergleich mit handelsüblichen Weichschaum-Aminaktivatoren zu einer deutlichen Verbesserung des Druckverformungsrestes der resultierenden Weichschäume führt.

Patentansprüche

1. Orthocarbonsäureester der allgemeinen Formel

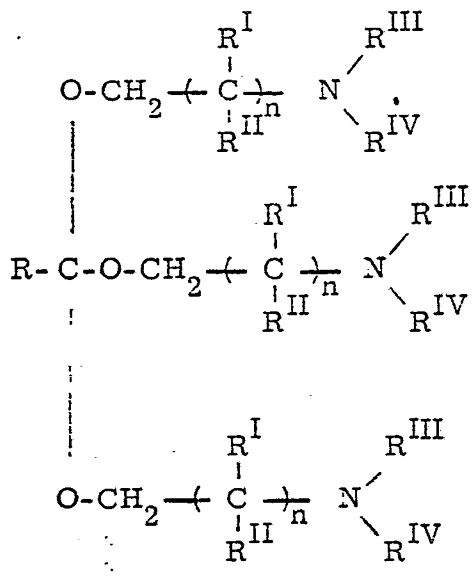

in der

R H, $C_1$-$C_{19}$-Alkyl, Aryl, vorzugsweise H, Methyl oder Phenyl,

$R^I$, $R^{II}$ H, $C_1$-$C_4$-Alkyl, vorzugsweise H und/oder Methyl, Ethyl

$R^{III}$, $R^{IV}$ $C_1$-$C_6$-Alkyl, zusammen mit N fünf- oder sechsgliedriger Heterocyclus, vorzugsweise Methyl, Ethyl

n eine ganze Zahl von 1-5

bedeuten.

2. Verfahren zur Herstellung von Orthocarbonsäureestern gemäß Anspruch 1, dadurch gekennzeichnet,

BAD ORIGINAL

daß man Orthocarbonsäuretrialkylester der allgemeinen Formel

$$R\text{-}C(OR^{VI})_3$$

in der

R die bereits genannte Bedeutung hat und

$R^{VI}$ $C_1$-$C_6$-Alkyl ist,

mit N,N-disubstituierten Aminoalkoholen der allgemeinen Formel

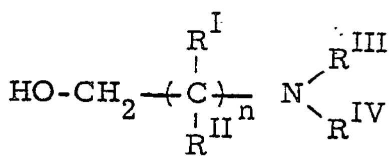

in der

$R^I$, $R^{II}$, $R^{III}$, $R^{IV}$ und n die bereits genannte Bedeutung haben,

in Gegenwart einer Säure bei einer Temperatur, die oberhalb des Siedepunktes der Alkoholkomponente des eingesetzten Orthocarbonsäureesters bei Normaldruck oder im Vakuum liegt, umestert.

3. Verfahren nach Anspruch 2, dadurch gekennzeichnet, daß die Umsetzung zwischen dem eingesetzten Orthocarbonsäureester und dem Aminoalkohol mindestens im Molverhältnis 1:3 erfolgt.

4. Verfahren nach Anspruch 2 und 3, dadurch gekennzeichnet, daß als Säure eine Lewissäure, insbesondere wasserfreies Zink- oder Zinn(II)-chlorid, eingesetzt wird.

5. Verfahren nach Anspruch 2-4, dadurch gekennzeichnet, daß maximal 10 Gew.-%, bezogen auf den eingesetzten Orthocarbonsäureester, Lewissäure eingesetzt wird.

6. Verfahren nach Anspruch 2-5, dadurch gekennzeichnet, daß der während der Umsetzung gebildete Alkohol kontinuierlich abdestilliert wird.

7. Verfahren nach Anspruch 2-6, dadurch gekennzeichnet, daß der eingesetzte Orthocarbonsäureester Orthoameisensäuretrimethylester und/oder Orthoameisensäuretriethylester oder Orthoessigsäuretrimethylester und/oder Orthoessigsäuretriethylester ist.

8. Verfahren nach Anspruch 2-7, dadurch gekennzeichnet, daß als Aminoalkohol N,N-Dimethylaminoethanol verwendet wird.

9. Verfahren zur Herstellung von gegebenenfalls zellförmigen Polyurethanen durch Umsetzung von

a) Polyisocyanaten mit

b) höhermolekularen Verbindungen mit mindestens zwei gegenüber Isocyanaten reaktionsfähigen Wasserstoffatomen sowie gegebenenfalls

c) Kettenverlängerungsmitteln in Gegenwart von

d) tertiären Aminen als Katalysatoren, gegebenenfalls unter Mitverwendung von

e) Treibmitteln, Stabilisatoren und weiteren an sich bekannten Zusatzstoffen,

dadurch gekennzeichnet, daß als Komponente d) Verbindungen gemäß Anspruch 1 eingesetzt werden.

10. Verfahren nach Anspruch 9, dadurch gekennzeichnet, daß als Komponente d) Orthoameisensäure-tris-(2-dimethylaminoethyl)-ester eingesetzt wird.

0021079

Nummer der Anmeldung

Europäisches Patentamt

## EUROPÄISCHER RECHERCHENBERICHT

EP 80102946.3

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A - 2 038 783 (JEFFERSON CHEMICAL COMPANY)<br>* Patentansprüche *<br>-- | 9 | C 07 C 93/04<br>C 07 C 93/08<br>C 08 G 18/18 |
| X | US - A - 3 879 465 (I.S.BECHARA, D.G.HOLLAND)<br>* Gesamt *<br>---- | 1-10 | |

RECHERCHIERTE SACHGEBIETE (Int. Cl. 3)

C 07 C 93/00
C 07 D 295/00
C 08 G 18/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 06-08-1980 | HOFBAUER |



BAD ORIGINAL